(19) **Europäisches Patentamt European Patent Office Office européen des brevets**

(11) **EP 1 431 774 B1**

(12) **FASCICULE DE BREVET EUROPEEN**

(45) Date de publication et mention de la délivrance du brevet:
**10.02.2010 Bulletin 2010/06**

(51) Int Cl.:
*G01S 13/22* *(2006.01)* *G01S 13/58* *(2006.01)*

(21) Numéro de dépôt: **03104589.1**

(22) Date de dépôt: **08.12.2003**

(54) **Procédé de mesure de fréquence Doppler par émission de trains d'impulsions lacunaires**

Verfahren zur Messung der Dopplerfrequenz durch Senden einer Pulsefolge mit Lücken

Doppler frequency measuring method by transmitting burst with missing pulses

(84) Etats contractants désignés:
**AT BE BG CH CY CZ DE DK EE ES FI FR GB GR HU IE IT LI LU MC NL PT RO SE SI SK TR**

(30) Priorité: **17.12.2002 FR 0216005**

(43) Date de publication de la demande:
**23.06.2004 Bulletin 2004/26**

(73) Titulaire: **Thales**
**92526 Neuilly Sur Seine (FR)**

(72) Inventeur: **Barbaresco, Frédéric**
**94117 Cedex, ARCUEIL (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**DE-C- 3 132 268    FR-A- 2 370 988**
**US-A- 3 906 498    US-A- 4 143 373**
**US-A- 5 247 303**

EP 1 431 774 B1

**Description**

La présente invention concerne les techniques de mesure de fréquence Doppler. Elle s'applique notamment aux radars Doppler à impulsions (connus sous le nom de « pulse Doppler radar » dans la littérature anglo-saxonne), aux sonars, aux systèmes d'imagerie à ultrason (échographie Doppler par exemple).

Dans un radar Doppler à impulsions, on émet signal radioélectrique sous la forme d'un train d'impulsions, les impulsions étant émises à intervalle de temps régulier, appelé période de récurrence (notée $T_R$). Les impulsions ont une fréquence porteuse donnée, par exemple de 1GHz. Le signal émis comprend donc un signal de modulation basse fréquence, appelé signal vidéo, modulant une porteuse à fréquence élevée. La fréquence du signal vidéo est égale à l'inverse de la période de récurrence.

L'analyse du signal réfléchi par une cible permet de déterminer sa vitesse radiale relative. A cet effet, on mesure le décalage en fréquence du train d'impulsions réfléchi (c'est à dire le signal réfléchi) par la cible par rapport au train d'impulsions émis (c'est à dire le signal émis). Si la cible se rapproche, elle réfléchit un train d'impulsions dont les impulsions sont rapprochées (c'est à dire un signal dont la fréquence est augmentée)

Un radar effectue plusieurs mesures dans un secteur d'observation déterminé. Le radar dispose d'un temps limité pour effectuer toutes ces mesures. Pour les radars à antenne tournante par exemple, ce temps est la durée pendant laquelle la zone à observer se trouve dans le champ d'émission et de réception de l'antenne. Cette durée est limitée par la vitesse de rotation de l'antenne et la capacité de déflexion maximale du faisceau en azimut. Ce problème de temps limité se pose aussi pour les radars à antenne fixe, en présence par exemple de cibles multiples à poursuivre. Le radar est en surcharge lorsqu'il ne peut pas effectuer toutes les mesures prévues.

La présente invention vise à améliorer la technique de mesure de fréquence Doppler, de manière à effectuer un même nombre de mesures dans un temps plus réduit qu'avec les techniques connues.

A cet effet, l'invention a notamment pour objet un procédé de mesure dans lequel on émet des impulsions de manière régulière mais de manière non uniforme. Plus précisément, l'invention a pour objet un procédé adapté à la mesure de la fréquence doppler des signaux reçus à partir de la détermination de la matrice de covariance desdits signaux reçus, ledit procédé comportant l'émission d'un premier train d'impulsions pour effectuer une première mesure de fréquence Doppler, une première impulsion formant le début du train d'impulsions, les autres impulsions étant séparées temporellement de la première impulsion par une durée multiple d'une période de récurrence Tr donnée, au moins deux impulsions successives du premier train d'impulsions présentent un écart temporel égal à une seule période $T_r$, et au moins deux impulsions successives du premier train d'impulsions présentent un écart temporel égal à un nombre entier, différent de 1, de périodes de récurrence $T_r$, la séquence formée par lesdites impulsions constituant le premier train d'impulsion étant une séquence dont l'histogramme des écarts entre deux impulsions fait apparaître un minimum de trous et un minimum de redondances.

L'invention présente l'avantage, en émettant les impulsions de manière régulière (mais non uniforme), de permettre de dénombrer un nombre de fréquences équivalent au cas uniforme. Les échantillons mesurés peuvent ensuite être traités en utilisant des techniques du second ordre (traitement Doppler haute résolution tel que MUSIC ou l'analyse auto-régressive régularisée), qui utilisent une matrice d'auto-corrélation estimée avec un nombre faible d'échantillons.

Selon un mode de réalisation avantageux, les impulsions du premier train forment une séquence à minimum de trou ou une séquence sans trou au sens large ou une séquence sans trou. Ceci permet de mesurer un spectre sans trou.

Selon un mode de réalisation avantageux, on entrelace le premier train d'impulsions lacunaire avec un autre train d'impulsion, ce qui permet d'effectuer une seconde mesure. Plus précisément, on émet un second train d'impulsions pour effectuer une seconde mesure, le premier et le second train d'impulsions étant entrelacés de sorte que au moins une impulsion du second train est émise entre deux impulsions du premier train, qui sont deux impulsions successives séparées temporellement de plus d'une période de récurrence.

Les principes d'entrelacement classiques utilisent une approche différente. Celle-ci consiste à libérer du temps en réception lorsqu'une mesure est réalisée en mode poursuite (mesure appelée alors "pointage de poursuite"). On place le radar en mode réception uniquement aux instants correspondant à une distance au voisinage de la position prédite de la cible (position fournie par l'algorithme de pistage). On peut alors émettre d'autres impulsions et attendre le retour des échos dans le temps libéré. On peut procéder de façon analogue pour les mesures réalisées en mode de veille, si la zone de veille se situe dans une couronne se trouvant à une certaine distance du radar. Toutefois, ce type d'entrelacement est limité par des contraintes technologiques (facteur de forme) qui empêchent de mettre l'antenne radar en mode d'émission plus de 10% du temps.

L'entrelacement selon l'invention ne présente pas cet inconvénient. En effet, on libère un temps d'émission-réception (et non un temps de réception seulement) pour lui substituer un autre temps d'émission-réception (par exemple dans une autre direction en dépointant angulairement le faisceau mais en gardant la cohérence de phase de l'émetteur). On conserve par conséquent le même facteur de forme.

Selon un mode de réalisation avantageux, les premiers et seconds trains d'impulsions sont des trains d'impulsions lacunaires destinés à mesurer des fréquences Doppler. Ainsi, les trains d'impulsions étant lacunaires, on peut relâcher une contrainte temporelle, ce qui fournit un degré de liberté supplémentaire pour entrelacer les trains d'impulsions. On peut grâce à cet entrelacement effectuer des mesures dans des portions différentes, par exemple à différentes distances d'observation ou dans des directions différentes, et ce dans une même durée.

L'invention sera maintenant décrite de manière plus détaillée dans le cadre d'un exemple particulier de réalisation pratique. Dans le cours de cette description, on fera référence aux figures des dessins annexés, parmi lesquelles :

- les figures 1 et 2, un exemple de train d'impulsions lacunaire non redondant et sans trou ;
- la figure 3, un histogramme représentant les écarts entre deux impulsions du train d'impulsions lacunaire précédent ;
- la figure 4, un autre exemple de train d'impulsions lacunaire non redondant et sans trou ;
- la figure 5, un train d'impulsions non lacunaire de sept impulsions ;
- les figures 6 et respectivement 7, un histogramme représentant les écarts entre deux impulsions du train représenté sur la figure 4 et respectivement 5;
- les figures 8, 10, 12, 14, d'autres exemples de trains d'impulsions lacunaires ;
- les figures 9, 11, 13, 15, les histogrammes correspondant aux trains d'impulsions représentés respectivement sur les figures 8, 10, 12, et 14 ;
- les figures 16 à 23, plusieurs exemple de mise en oeuvre d'un mode de réalisation avantageux de l'invention, dans lequel au moins deux trains d'impulsion lacunaire sont entrelacés

Il est connu d'émettre les impulsions de manière régulière et uniforme. Selon une caractéristique essentielle de l'invention, certaines impulsions sont séparées de plus d'une période de récurrence. En d'autres termes le train d'impulsions est lacunaire (non uniforme).

On peut représenter les instants d'émission des impulsions par une séquence d'entiers. Chaque entier de la séquence représente l'écart, exprimé en nombre de périodes de récurrence, entre une impulsion du train et celle qui la précède. En d'autres termes, on liste les écarts entre les impulsions. Bien entendu, le plus grand diviseur commun des entiers de la séquence est un. Si le plus grand diviseur était plus grand que un, la période de récurrence effective serait le produit de ce plus grand diviseur par la pseudo période de récurrence. Ceci signifie que le train d'impulsions comprend au moins deux impulsions séparées d'une seule période de récurrence.

En utilisant cette représentation, un train d'impulsions selon l'invention correspond à une séquence d'entiers comprenant au moins un entier égal à un, et au moins un entier supérieur ou égal à deux.

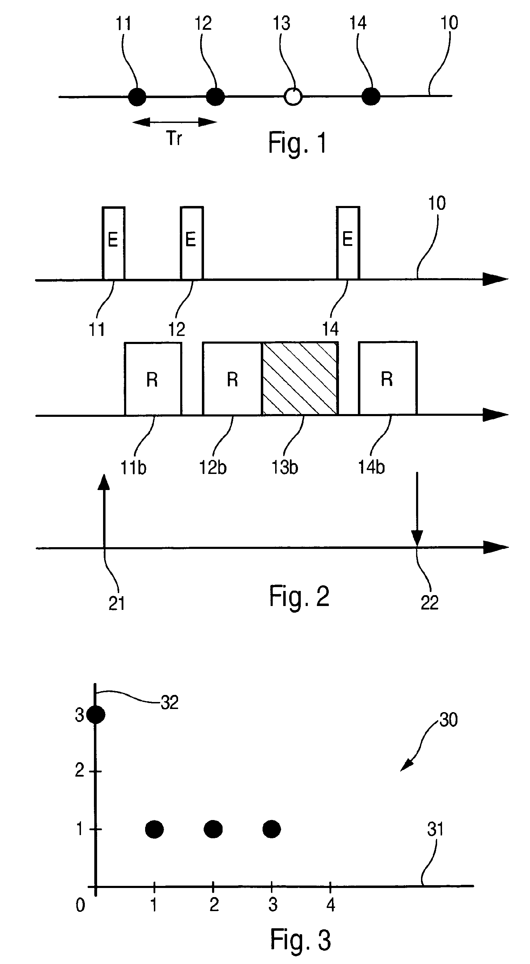

On se réfère maintenant aux figures 1 et 2 sur lesquelles est représenté un exemple de train d'impulsions lacunaire. Ce train d'impulsions 10 peut être représenté par la séquence { 1 ; 2 }. Il comprend trois impulsions 11, 12, 14, les deux premières impulsions 11, 12 ayant un écart d'une période de récurrence Tr, les deux dernières 12, 14 un écart de deux périodes de récurrence. Un train d'impulsions non lacunaire de même durée comprendrait une quatrième impulsion 13 entre la deuxième 12 et la troisième 14.

On se réfère à la figure 2. Après chaque impulsion émise, le radar est en mode réception pour écouter les signaux échos provenant des cibles. Il reste en mode réception pendant une durée déterminée. La somme des durées d'émission et de réception est égale à une période de récurrence. Ainsi, après la première impulsion 11, le radar est en mode réception dans l'intervalle temporel 11b entre cette impulsion et la suivante 12b. Pendant l'intervalle temporel 11b, le radar écoute les échos des cibles ayant réfléchi l'impulsion 11. De même après la seconde impulsion 12, le radar est en mode réception pendant un intervalle temporel 12b pour écouter les échos des cibles ayant réfléchi l'impulsion 12. Toutefois, l'intervalle temporel 12b ne se prolonge pas jusqu'à la prochaine impulsion émise 14. Le radar dispose d'un intervalle temporel 13b pendant lequel il est libre, du moins en ce qui concerne cette mesure. Cet intervalle temporel 13b est égale à une période de récurrence. Il a été libéré grâce à l'utilisation d'un train d'impulsions lacunaire. Ce temps libre peut être utilisé pour effectuer d'autres mesures, par exemple dans une autre direction de visée.

Chaque intervalle temporel de réception correspond à un intervalle de distances (chaque distance correspond à un temps d'aller retour de l'impulsion). De manière classique, on divise chaque intervalle de réception 11b, 12b, 14b en cases distances, chaque case distance étant associée à une distance déterminée. On décrit par la suite le traitement appliqué en ne considérant qu'une case distance, ce traitement pouvant être appliqué de la même façon à d'autres cases distance.

On produit un signal vidéo en multipliant le signal hyperfréquence incident avec le signal émis, retardé du temps d'aller retour de l'impulsion pour la case distance considérée. On peut utiliser un détecteur amplitude-phase, bien connu de l'homme du métier. On dispose d'un échantillon par impulsion émise. Ces échantillons peuvent être représentés par des nombres complexes $x_n$ où n représente le nombre de périodes de récurrence séparant l'impulsion considérée de la première impulsion du train. Lorsqu'on émet un train d'impulsions lacunaire, on ne dispose pas d'échantillon de signal pour toutes les valeurs de n. Par exemple, pour un train d'impulsions dont la séquence est { 1 ; 2 }, on dispose de trois échantillons de signal $x_0$, $x_1$ et $x_3$, mais pas d'échantillon $x_2$.

Une fois les échantillons de signal déterminés, on effectue un traitement pour déterminer le spectre du signal.

Ce spectre contient l'information Doppler. Chaque pic de ce spectre correspond à une fréquence Doppler. Certains échantillons de signal n'étant pas déterminés, il n'est pas possible d'utiliser une transformée de Fourrier discrète (TFD) classique, laquelle nécessite d'avoir un échantillonnage temporel régulier.

On peut utiliser à la place des techniques basées sur l'estimation d'une matrice de covariance. La matrice de covariance est une matrice de Toeplitz (tous les termes appartenant à une diagonale parallèle à la diagonale principale de la matrice sont égaux), Hermitienne (la matrice est égale au conjugué de sa tranposée). La matrice de covariance d'ordre N s'écrit :

$$R_N = \begin{bmatrix} c_0 & c_1^* & c_2^* & \dots & c_{N-1}^* \\ c_1 & c_0 & c_1^* & \ddots & \vdots \\ c_2 & c_1 & c_0 & \ddots & c_2^* \\ \vdots & \ddots & \ddots & \ddots & c_1^* \\ c_{N-1} & \dots & c_2 & c_1 & c_0 \end{bmatrix}$$

Les termes $c_k$ de cette matrice sont déterminés en estimant la covariance des échantillons de signaux séparés d'un intervalle de temps de k fois la période de récurrence. Le terme $c_0$ n'est rien d'autre que la puissance moyenne du signal vidéo. L'indice $N$ est égal à la durée totale du train d'impulsions (en nombre de périodes de récurrence) moins un. Par conséquent, $N$ est le nombre de périodes de récurrence séparant la première et la dernière impulsion du train. On peut décrire les termes $c_k$ par la relation suivante :

$$c_k = E\left(x_n \cdot x_{n-k}^*\right)$$

où E représente l'estimateur d'une variable aléatoire, l'indice n étant variable.

Si on considère le train 10 (voir figure 1), on a :

$$N = 3$$

$$c_0 = E\left(x_0 \cdot x_0^* \; ; \; x_1 \cdot x_1^* \; ; \; x_3 \cdot x_3^*\right) = \frac{x_0 \cdot x_0^* + x_1 \cdot x_1^* + x_3 \cdot x_3^*}{3}$$

$$c_1 = E\left(x_0 \cdot x_1^*\right) = x_0 \cdot x_1^*$$

$$c_2 = E\left(x_1 \cdot x_3^*\right) = x_1 \cdot x_3^*$$

$$c_3 = E\left(x_0 \cdot x_3^*\right) = x_0 \cdot x_3^*$$

On peut déterminer le spectre à partir de cette matrice $R_N$ en effectuant une analyse en sous-espace (de type MUSIC) ou en utilisant une méthode auto-régressive régularisée.

On décrit maintenant un exemple de mise en oeuvre d'une méthode auto-régressive régularisée. Cette méthode auto-régressive est basée sur la résolution de l'équation de Yule-Walker, qui s'écrit :

$$R_N \; A_N = -C_N$$

$$A_N = \begin{bmatrix} a_1^{(N)} \\ a_2^{(N)} \\ \vdots \\ a_N^{(N)} \end{bmatrix} \qquad\qquad C_N = \begin{bmatrix} c_1 \\ c_1 \\ \vdots \\ c_N \end{bmatrix}$$

Les notations étant les suivantes :

-    $R$ est la matrice de covariance décrite plus haut,
-    $A$ est un vecteur de paramètres autorégressifs à l'ordre N, à estimer,
-    $C$ est un vecteur des moments du signal, les N-1 premiers termes de ce vecteur étant aussi dans la matrice $R_N$.

Les termes du vecteur $A_N$ sont utilisés comme coefficients d'un polynôme $P$ :

$$P(z) = 1 + a_1^{(N)} \cdot z^{-1} + a_2^{(N)} \cdot z^{-2} + \cdots + a_N^{(N)} \cdot z^{-N}$$

On détermine une estimation du spectre, $S(f)$, à partir de ce polynôme :

$$S(f) = \frac{\sigma^2}{\mid P(\exp(j2\pi f)) \mid^2}$$

Les notations étant les suivantes :

-    $f$ représente une fréquence normalisée dont les valeurs sont comprises entre zéro et un ;
-    $\sigma^2$ est la puissance du bruit ;
-    $j$ est la racine carrée de moins un.

On peut utiliser l'agorithme de Levison classique pour résoudre l'équation de Yule-Walker. Cet algorithme résoud cette équation de façon récursive (l'indice $n$ allant jusqu'à $N$) en utilisant les deux équations suivantes :

$$\begin{bmatrix} a_1^{(n)} \\ a_2^{(n)} \\ \vdots \\ a_{n-1}^{(n)} \end{bmatrix} = \begin{bmatrix} a_1^{(n-1)} \\ a_2^{(n-1)} \\ \vdots \\ a_{n-1}^{(n-1)} \end{bmatrix} + a_n^{(n)} \begin{bmatrix} a_{n-1}^{(n-1)^*} \\ a_{n-2}^{(n-1)^*} \\ \vdots \\ a_1^{(n-1)^*} \end{bmatrix} \qquad\qquad (1)$$

et

$$a_n^{(n)} = -\frac{\Psi_n}{\Phi_n} \qquad (2)$$

avec

$$\Psi_n = c_n + \begin{bmatrix} c_{n-1} & \cdots & c_2 & c_1 \end{bmatrix} \cdot \begin{bmatrix} a_1^{(n-1)} \\ a_2^{(n-1)} \\ \vdots \\ a_{n-1}^{(n-1)} \end{bmatrix}$$

$$\Phi_n = \left( 1 - \left| a_{n-1}^{(n-1)} \right|^2 \right) \Phi_{n-1}$$

La première équation (1) est intéressante, mais la seconde (2) est problématique. En effet, les moments du signal $c_k$ sont estimés avec peu de données car l'échantillonnage est lacunaire. Ils sont donc estimés avec une grande variance. Il en résulte des pics parasites dans le spectre estimé $S(f)$.

Afin de résoudre ce problème, l'algorithme de Levinson est adapté (régularisé) en remplaçant la seconde équation (2) par l'équation suivante :

$$a_n^{(n)} = -\frac{\Psi_n + 2 \sum_{k=1}^{n-1} \beta_k^{(n)} a_k^{(n-1)} a_{n-k}^{(n-1)}}{\Phi_n + 2 \sum_{k=0}^{n-1} \beta_k^{(n)} \left| a_k^{(n-1)} \right|^2} \qquad (3)$$

avec

$$\beta_k^{(n)} = \gamma_1 \left( 2\pi \right)^2 \left( k - n \right)^2$$

On trouvera d'autres informations relatives à la régularisation, dans la publication de brevet FR 2 735 594, correspondant à la demande de brevet numéro 9506983 déposée le 13-06-1995 au nom de THOMSON-CSF, ayant pour titre "Procédé et dispositif de détermination du spectre de fréquences d'un signal", du même inventeur (équivalents : US5729465, EP0749083), qui décrit une méthode régularisation à l'aide d'un critère analogue dans méthode d'analyse auto-régressive différente (méthode du maximum d'entropie de BURG).

On décrit maintenant un exemple d'analyse en sous espace. Selon cette méthode, on détermine les vecteurs propres $X_k^{(N)}$ de la matrice de covariance $R_N$ :

$$X_k^{(N)} = \begin{bmatrix} X_{k,1}^{(N)} \\ X_{k,2}^{(N)} \\ \vdots \\ X_{k,N}^{(N)} \end{bmatrix}$$

On détermine une estimation du spectre, $S(f)$ à partir de ces vecteurs propres :

$$S(f) = \frac{1}{\left| \displaystyle\sum_{k=p+1}^{N} X_k^{(N)^{*+}} \cdot Y(f) \right|^2}$$

où le signe + représente la transposée, et * le nombre complexe conjugué :

$$X_k^{(N)^{*+}} = \begin{bmatrix} X_{k,1}^{(N)^*} & X_{k,2}^{(N)^*} & \cdots & X_{k,N}^{(N)^*} \end{bmatrix}$$

avec

$$Y(f) = \begin{pmatrix} 1 \\ \exp(j2\pi f) \\ \exp(2 \times j2\pi f) \\ \exp(3 \times j2\pi f) \\ \vdots \\ \exp((N-1) \times j2\pi f) \end{pmatrix}$$

où:

- $p$ est un paramètre à estimer, qui représente le nombre de fréquences présente dans le spectre ;
- $f$ représente une fréquence normalisée comprise entre zéro et un,
- $j$ est la racine carrée de moins un ;
- $X_k^{(N)}$ est le k$^{ème}$ vecteur propre de la matrice $R_N$, les vecteurs propres étant classés par ordre de valeur propre décroissante.

Si le spectre du signal ne comprend que trois fréquences par exemple, $p$ vaut trois. La quatrième valeur propre sera alors sensiblement égale à la puissance de bruit $\sigma^2$. De cette manière on peut estimer la valeur du paramètre $p$.
On peut utiliser une méthode récursive (MUSIC, CAPON) régularisée pour déterminer les valeurs propres et vecteurs propres de la matrice de covariance $R_N$.

On note $R_N^{-1}$ la matrice inverse de la matrice de covariance. Les vecteurs propres des matrices $R_N$ et $R_N^{-1}$ sont les mêmes. Leurs valeurs propres sont inverses.

On note $\eta_k^{(N)}$ les valeurs propres de la matrice $R_N^{-1}$.

Les valeurs propres $\eta_k^{(N)}$ peuvent être déterminées récursivement à chaque ordre de façon parallèle comme zéro d'une fonction $F^{(n)}(\eta)$ définie par partie, et dont les bornes sont les valeurs propres à l'ordre précédent. En d'autres termes, cette fonction est définie par morceaux sur :

$$\overset{n-2}{\underset{i=1}{U}} \quad ]\eta_{n-i}^{(n-1)} \,;\, \eta_{n-i-1}^{(n-1)} [$$

On prend par exemple comme majorant la trace déterminée également récursivement. Sur chaque intervalle, la fonction $F^{(n)}(\eta)$ est strictement croissante et ne possède qu'un zéro, ce qui permet le calcul parallèle des valeurs propres par dichotomie.

La fonction $F^{(n)}(\eta)$ est définie notamment à partir des coefficients autorégressifs déterminés par exemple par la méthode de Levinson régularisée (voir plus haut) et des vecteurs propres à l'ordre n-1. La fonction s'écrit :

$$F^{(n)}\left(\eta\right) = \eta - \alpha_{n-1} + \alpha_{n-1}\ \eta \sum_{i=1}^{n-1} \frac{\left| \left[a_1^{(n-1)} \quad a_2^{(n-1)} \quad \dots \quad a_{n-1}^{(n-1)}\right] \cdot X_i^{(n-1)} \right|^2}{\eta_i^{(n-1)} - \eta}$$

où $a_k^{(n)}$ est le k$^{\text{ème}}$ coefficient du vecteur de paramètre autorégressif $A_n$ estimé par la méthode de Levinson régularisée, avec

$$\alpha_n = \frac{\alpha_{n-1}}{1 - \left|a_n^n\right|^2}$$

On trouve la valeur propre $\eta_k^{(n)}$ comme zéro de cette fonction :

$$F^{(n)}\left(\eta_k^{(n)}\right) = 0$$

On en déduit les vecteurs propres à l'ordre n par la formule suivante :

$$\begin{bmatrix} X_{k,2}^{(n)} \\ X_{k,3}^{(n)} \\ \vdots \\ X_{k,n}^{(n)} \end{bmatrix} = -\eta_k^{(n)}\ X_{k,1}^{(n)}\ U_{n-1} \left(\Lambda_{n-1} - \eta_k^{(n)}\ I_{n-1}\right)^{-1} U_{n-1}^+\ A_{n-1}$$

avec

$$U_{n-1} = \begin{bmatrix} X_1^{(n-1)} & X_2^{(n-1)} & \dots & X_{n-1}^{(n-1)} \end{bmatrix}$$

$$I_{n-1} = U_{n-1}^{+} \, U_{n-1} = U_{n-1} \, U_{n-1}^{+}$$

$$\Lambda_{n-1} = \begin{bmatrix} \eta_1^{(n-1)} & 0 & \cdots & 0 \\ 0 & \eta_2^{(n-1)} & \ddots & \vdots \\ \vdots & \ddots & \ddots & 0 \\ 0 & \cdots & 0 & \eta_{n-1}^{(n-1)} \end{bmatrix}$$

Pour mémoire, les valeurs propres et vecteurs propres de $R_{n-1}^{-1}$ sont liés par la relation matricielle suivante :

$$U_{n-1}^{+} \, R_{n-1}^{-1} \, U_{n-1} = \Lambda_{n-1}$$

On trouvera d'autres informations sur l'analyse en sous espaces dans la publication de brevet FR 2 748 587 du même inventeur, ayant pour titre "Procédé d'analyse spectrale haute résolution mettant en oeuvre les valeurs et vecteurs propres de la matrice de corrélation du signal".

On se réfère maintenant à la figure 3 sur laquelle est représenté un histogramme. L'histogramme 30 représente les écarts entre deux impulsions du train 10 (voir figure 1). La valeur de l'écart est représentée sur l'axe des abscisses 31. Le nombre d'occurrences de cet écart est représenté sur l'axe des ordonnées 32.

Le nombre d'occurrences de l'écart zéro n'est autre que le nombre d'impulsions du train, c'est à dire trois. On dispose donc de trois occurrences pour estimer la valeur de $c_0$ (voir la relation précédente).

Le nombre d'occurrences des écarts un, deux, trois, est égal à un. En d'autres termes, il n'existe qu'un couple d'échantillons ($x_n$ ; $x_{n-k}$) pour tout k entre un et trois. Par conséquent, on dispose d'une et d'une seule occurrence pour estimer la valeur de $c_1$, $c_2$ et $c_3$ (voir les relations précédentes).

Avantageusement, le train d'impulsions présente un histogramme d'écart dans lequel chaque valeur d'écart apparaît au moins une fois. Ceci permet de disposer d'au moins une occurrence, c'est à dire un couple d'échantillons de signal, pour estimer la valeur de chaque terme $c_k$ de la matrice de covariance R. On appelle une telle séquence d'impulsions une séquence sans trou. L'histogramme des écarts d'une séquence sans trou ne comporte pas de valeur nulle.

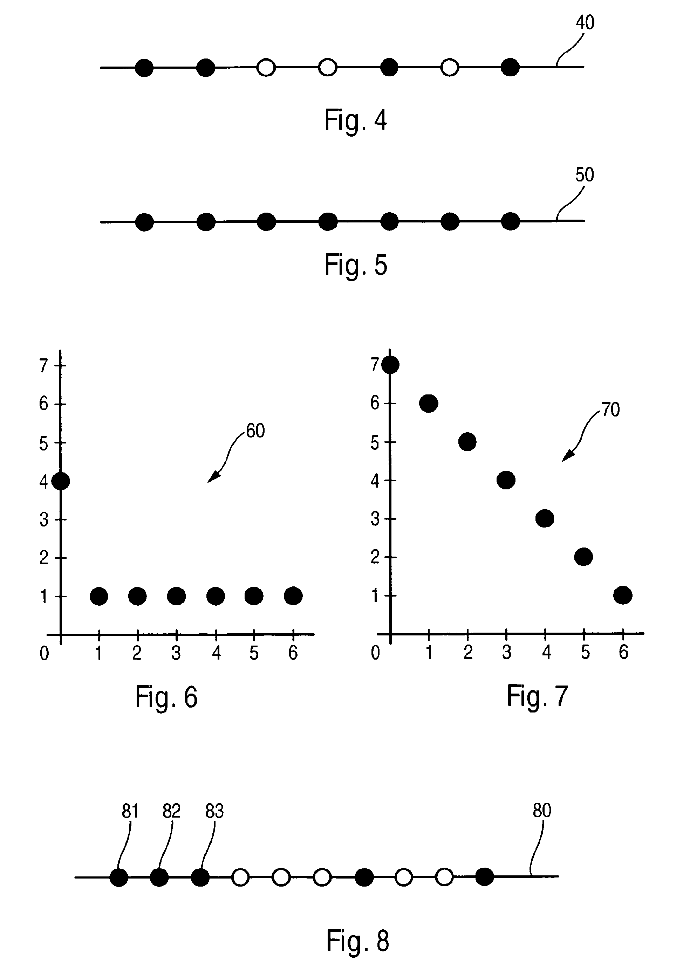

On se réfère maintenant aux figures 4 et 5 sur lesquelles sont représentés un autre exemple de train d'impulsions lacunaire 40, et un train d'impulsions non lacunaire 50 de même durée. Le train d'impulsions lacunaire 40 comprend quatre impulsions et dure sept périodes de récurrences (N=7). Il peut être représenté par la séquence { 1; 3; 2 }. Le train d'impulsions non lacunaire 50 comprend sept impulsions.

On se réfère maintenant aux figures 6 et 7 sur lesquelles sont représentés les histogrammes 60, 70 des écarts des trains d'impulsion 40 et 50. On remarque (voir figure 6) que le train d'impulsions 40 est sans trous, tous les écarts compris entre zéro et six étant représentés au moins une fois. Le train d'impulsions 50 est aussi sans trou (voir figure 7).

Ainsi ces deux trains d'impulsions permettent d'estimer tous les termes de la matrice de covariance. Cependant le train d'impulsions lacunaire a l'avantage de nécessiter moins d'impulsions.

On remarque en outre que chaque écart (à partir de un) n'est présent qu'une fois dans la séquence. On appelle une telle séquence une séquence non redondante. Une séquence non redondante et sans trou comprend le nombre minimum d'impulsions permettant d'estimer tous les termes de la matrice de covariance.

On se réfère maintenant à la figure 8 sur laquelle est représenté un train d'impulsions lacunaire sans trou. Ce train d'impulsions 80 comprenant cinq impulsions peut être représenté par la séquence { 1; 1; 4; 3 }.

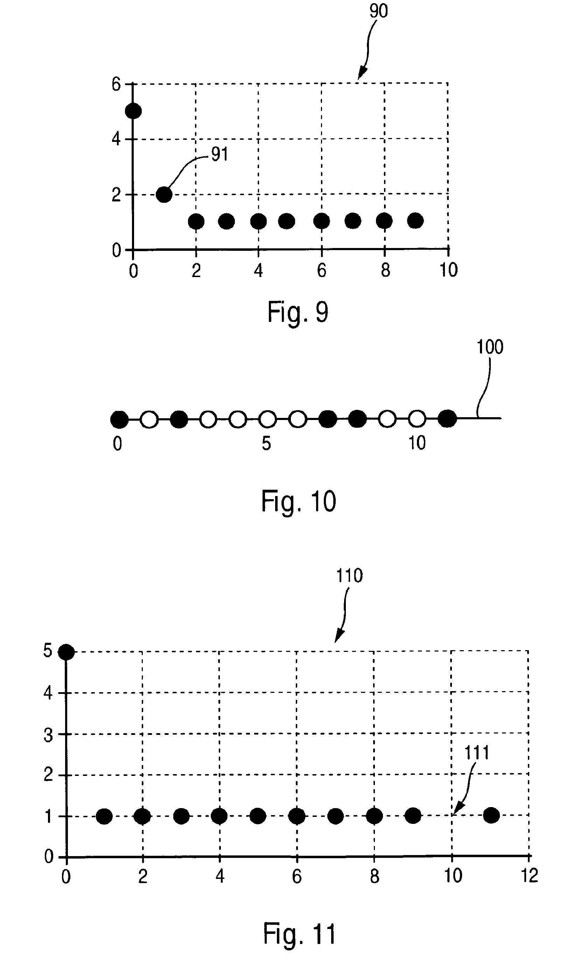

On se réfère maintenant à la figure 9 sur laquelle est représenté l'histogramme 90 du train d'impulsions 80. Comme on peut le lire sur cet histogramme, l'histogramme 90 comprend une redondance 91. L'écart un est représenté deux fois dans le train d'impulsions 80. Les deux premières impulsions 81 et 82, ainsi que la seconde 82 et la troisième 83 impulsions sont en effet distantes temporellement d'une période de récurrence. Toutefois, il n'est pas possible d'obtenir un train d'impulsions d'une telle durée sans trous et non redondant. Ce train d'impulsions est un train d'impulsions lacunaire, sans trous, et présentant le nombre minimum de redondance.

On présente dans le tableau suivant une liste de séquences sans trous à minimum de redondance, étant entendu qu'en inversant une séquence, on obtient une séquence équivalente (présentant le même histogramme, donc sans trous et à minimum de redondance) :

| Durée | Impulsions | Séquence | Redondance | Réf. |
|---|---|---|---|---|
| 4 | 3 | 1 2 | 0 | 10 (fig. 1) |
| 7 | 4 | 1 3 2 | 0 | 40 (fig. 4, 22) |
| 10 | 5 | 1 3 3 2 | 1 | 171 (fig. 17, 20) |
| 10 | 5 | 1 1 4 3 | 1 | 80 (fig. 8) |
| 14 | 6 | 1 1 4 4 3 | 2 | 201 (fig. 20) |
| 14 | 6 | 1 3 1 6 2 | 2 | 181 (fig. 18) |
| 14 | 6 | 1 5 3 2 2 | 2 | - |
| 18 | 7 | 1 1 4 4 4 3 | 4 | 120 (fig. 12, 21) |
| 18 | 7 | 1 1 1 5 5 4 | 4 | - |
| 18 | 7 | 1 1 6 4 2 3 | 4 | - |
| 18 | 7 | 1 3 6 2 3 2 | 4 | - |
| 18 | 7 | 1 7 3 2 2 2 | 4 | 222 (fig. 22) |

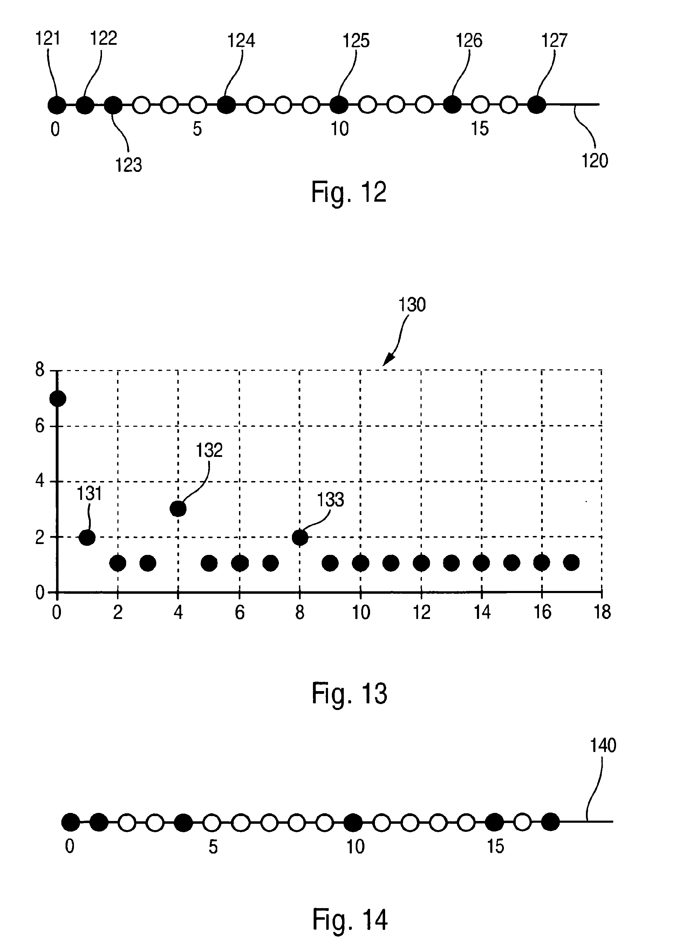

On se réfère maintenant à la figure 12 sur laquelle est représentée la séquence {1 1 4 4 4 3 }. Cette séquence 120 comprend sept impulsions référencées 121 à 127. On a déterminé les écarts temporels (exprimés en multiple de période de récurrence) entre les impulsions de cette séquence dans le tableau suivant :

| Réf. | 121 | 122 | 123 | 124 | 125 | 126 | 127 |
|---|---|---|---|---|---|---|---|
| 121 | 0 | 1 | 2 | 6 | 10 | 14 | 17 |
| 122 | - | 0 | 1 | 5 | 9 | 13 | 16 |
| 123 | - | - | 0 | 4 | 8 | 12 | 15 |
| 124 | - | - | - | 0 | 4 | 8 | 11 |
| 125 | - | - | - | - | 0 | 4 | 7 |
| 126 | - | -- | - | - | - | 0 | 3 |
| 127 | - | - | - | - | - | - | 0 |

Les références des impulsions sont rappelées dans la première ligne et dans la première colonne de ce tableau. On peut lire par exemple que l'écart temporel entre la troisième impulsion 123 et la cinquième 125 est égal à huit. La diagonale de ce tableau comprend des valeurs nulles. On retrouve la notation abrégée de la séquence dans la seconde diagonale de ce tableau.

L'histogramme des écarts peut se déduire de ce tableau. Il suffit de compter le nombre d'occurrences de chaque écart entre zéro et dix-sept, c'est à dire l'écart le plus important (celui entre la première 121 et la dernière impulsion 127). Dans ce tableau, chaque écart apparaît au moins une fois. La séquence 120 est donc sans trou.

La séquence 120 présente des redondances 131, 132, 133. Ces redondances correspondent aux écarts un, quatre et huit. L'écart un est redondant car il apparaît deux fois. La première fois entre les impulsions 121 et 122. La seconde entre les impulsions 122 et 123. L'écart quatre est doublement redondante car il apparaît trois fois. L'écart huit est redondant car il apparaît deux fois. Au total, le nombre de redondances est quatre (1+2+1).

On décrit maintenant une variante de mise en oeuvre. Selon cette variante, plutôt que de chercher à obtenir une séquence sans trou, on accepte des trous dans la séquence, pourvu que ces trous soient situés dans une zone inutilisée de l'histogramme. On définit une durée utile, inférieure à la durée de la séquence. Tous les écarts supérieurs à cette durée utile ne sont pas utilisés pour déterminer la matrice de covariance. En d'autres termes, la dimension de la matrice de covariance est donnée par la durée utile et non par la durée totale.

On présente dans le tableau suivant une liste de séquences sans trous au sens large à minimum de redondance, étant entendu qu'en inversant une séquence, on obtient une séquence équivalente :

| Durée utile | Durée totale | Impulsions | Séquence | Redondance | Réf. |
|---|---|---|---|---|---|
| 10 | 12 | 5 | 3 1 5 2 | 0 | - |
| 10 | 12 | 5 | 2 5 1 3 | 0 | - |
| 10 | 14 | 5 | 4 1 2 6 | 0 | 221 (fig. 22) |
| 14 | 17 | 6 | 4 1 1 7 3 | 1 | - |
| 14 | 18 | 6 | 1 3 6 2 5 | 0 | 231 (fig. 23) |
| 14 | 18 | 6 | 1 7 3 2 4 | 0 | - |
| 14 | 20 | 6 | 6 1 2 2 8 | 1 | - |
| 19 | 25 | 7 | 6 3 1 7 5 2 | 1 | 223 (fig. 22) |
| 19 | 26 | 7 | 8 1 3 6 5 2 | 1 | 232 (fig. 23) |
| 19 | 32 | 7 | 14 1 3 6 2 5 | 0 | - |
| 19 | 32 | 7 | 13 1 2 5 4 6 | 0 | - |

On décrit maintenant une variante de mise en oeuvre. Selon cette variante, plutôt que de chercher à obtenir une séquence sans trou, on accepte des trous dans la séquence, pourvus que les termes de la matrice de covariance puissent être estimés par interpolation. En relâchant la contrainte sur l'absence de trous, on peut obtenir des séquences non redondantes, donc qui nécessitent moins d'impulsions.

On présente dans le tableau suivant une liste de séquences non redondantes à minimum de trous, étant entendu qu'en inversant une séquence, on obtient une séquence équivalente :

| Durée | Impulsions | Séquence | Trous | Réf. |
|---|---|---|---|---|
| 4 | 3 | 1 2 | 0 | 10 |
| 7 | 4 | 1 3 2 | 0 | 40 |
| 12 | 5 | 1 3 5 2 | 1 | - |
| 12 | 5 | 2 5 1 3 | 1 | 100 (fig. 10) |
| 18 | 6 | 1 7 3 2 4 | 2 | - |
| 18 | 6 | 1 7 4 2 3 | 2 | - |
| 18 | 6 | 1 3 6 2 5 | 2 | 231 (fig. 23) |
| 18 | 6 | 1 3 6 5 2 | 2 | 140 (fig. 14, 19) |
| 26 | 7 | 1 10 5 3 4 2 | 4 | - |
| 26 | 7 | 1 6 4 9 3 2 | 4 | - |
| 26 | 7 | 1 3 6 8 5 2 | 4 | - |
| 26 | 7 | 2 5 6 8 1 3 | 4 | - |
| 26 | 7 | 2 1 7 6 5 4 | 4 | - |

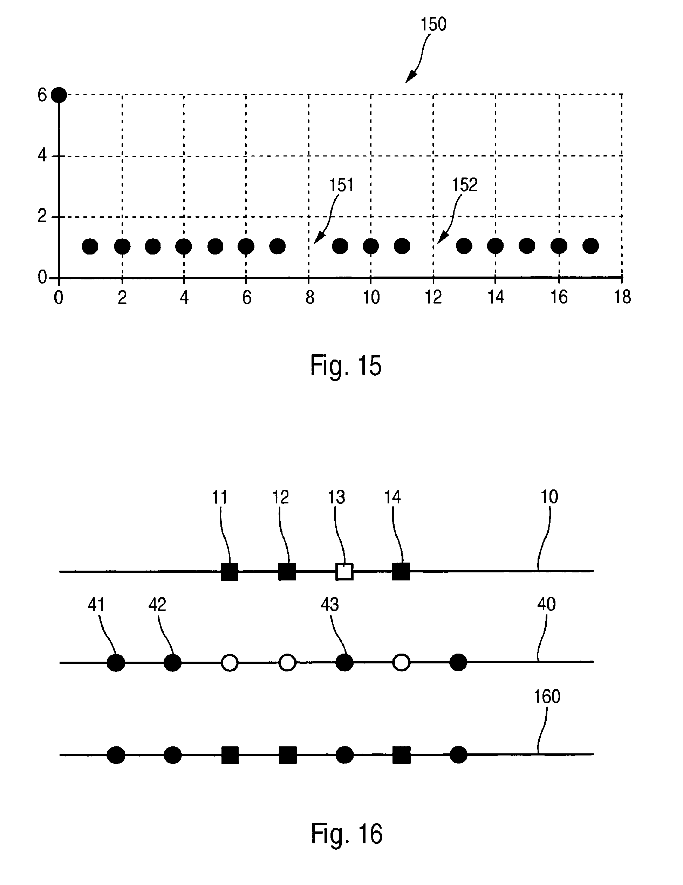

On décrit maintenant, en relation avec les figures 16 à 23, plusieurs exemple de mise en oeuvre d'un mode de réalisation avantageux de l'invention. Dans ce mode de réalisation avantageux, au moins deux trains d'impulsion lacunaire sont entrelacés. Les impulsions de chaque train sont représentées par des formes différentes (carré, rond, triangle...). Ces formes différentes correspondent par exemple à des directions de visées différentes.

On se réfère maintenant à la figure 16 sur laquelle est représenté un exemple de mise en oeuvre avantageux de l'invention. Les trains d'impulsion 10 et 40 décrit précédemment sont entrelacés, les impulsions 11 et 12 du premier train 10 étant émises après les deux premières impulsions 41, 42 du second train 40. On obtient ainsi une séquence 160 comprenant sept impulsions. Cette séquence permet d'effectuer deux mesures qui, si les trains d'impulsions étaient uniformes nécessiteraient onze impulsions. On économise une durée de quatre périodes de récurrence.

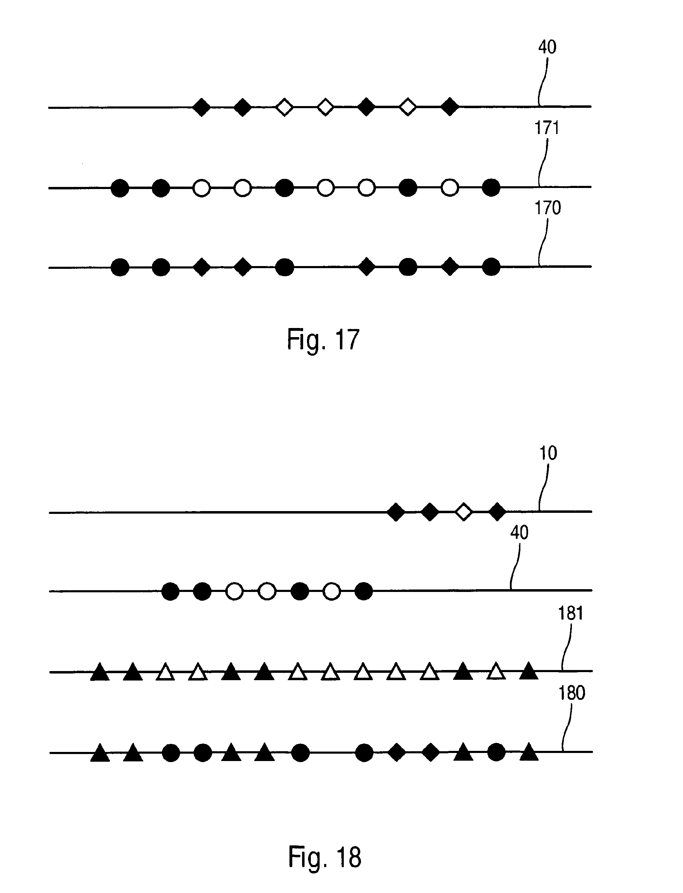

On se réfère maintenant à la figure 17 sur laquelle est représenté un autre exemple de mise en oeuvre. Le train d'impulsions 40 est entrelacé avec un train d'impulsions 171, comprenant cinq impulsions, ayant pour séquence { 1; 3; 3; 3 }. Ce train d'impulsions 171 est sans trous à minimum de redondance (une redondance). On utilise au total une durée de neuf périodes de récurrences, et on émet huit impulsions. Les deux mesures, si on avait utilisé des trains d'impulsion uniforme, auraient nécessité dix-sept périodes de récurrence.

On se réfère maintenant à la figure 18 sur laquelle est représenté un autre exemple de mise en oeuvre. Les trains d'impulsion 10 et 40 sont entrelacés avec un troisième train d'impulsions 181, comprenant six impulsions, et ayant pour séquence { 1; 3; 1; 6; 2 }. Ce train d'impulsions 181 est sans trous à minimum de redondance (deux redondances). On utilise au total une durée de quatorze périodes de récurrences, et on émet treize impulsions. Les trois mesures auraient nécessité vingt-neuf périodes de récurrence.

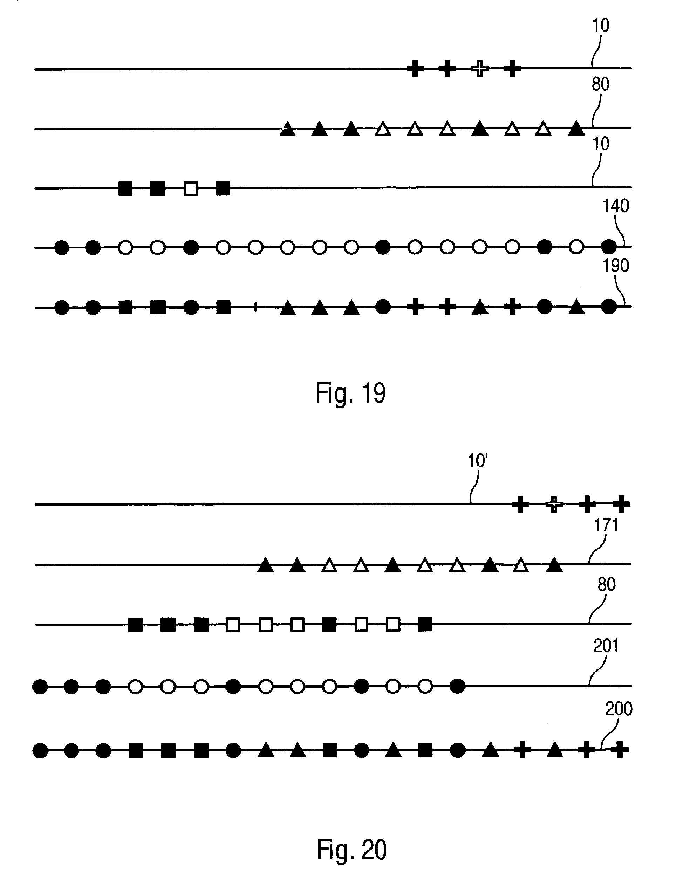

On se réfère maintenant à la figure 19 sur laquelle est représenté un autre exemple de mise en oeuvre. Les trains d'impulsion 10 et 80 sont entrelacés avec un train d'impulsions 140. Le train d'impulsions 10 est utilisé deux fois, chaque fois pour effectuer une mesure différente. Le train d'impulsions 140, représenté aussi sur la figure 14, comprend six impulsions. Il a pour séquence { 1; 3; 6; 5; 2 }. L'histogramme d'écarts correspondant est représenté sur la figure 15. Le train d'impulsions 140 est non redondant à minimum de trous. Il présente deux trous 151, 152. Tous les termes de la matrice de covariance correspondante peuvent être estimés en utilisant des interpolations. On effectue ainsi quatre mesures en utilisant seulement dix-huit périodes de récurrence au lieu de trente-six normalement.

On se réfère maintenant à la figure 20 sur laquelle est représenté un autre exemple de mise en oeuvre. On entrelace quatre trains d'impulsion 10', 171, 80, 201. Le train d'impulsions 10' est l'inverse du train d'impulsions 10. Le train d'impulsions 201 a pour séquence { 1; 1; 4; 4; 3 }. C'est un train d'impulsions sans trous à minimum de redondance (deux redondances). On passe de trente huit impulsions (trains uniformes) à dix-neuf impulsions (trains lacunaires). L'entrelacement 200 permet d'effectuer ces quatre mesures en utilisant dix-neuf périodes de récurrences.

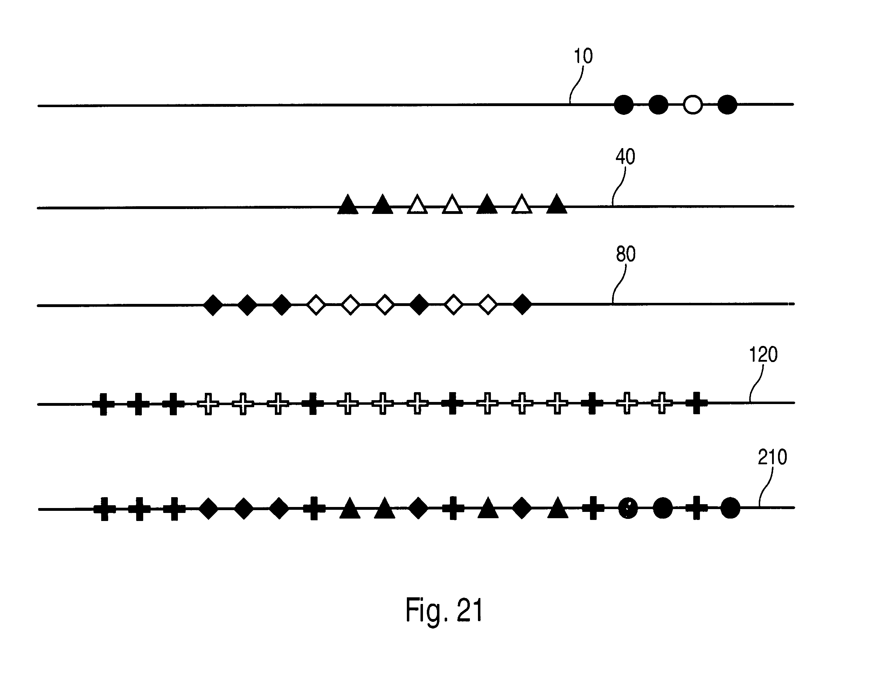

On se réfère maintenant à la figure 21 sur laquelle est représenté un autre exemple de mise en oeuvre. On entrelace quatre trains d'impulsions 10, 40, 80, 120. Le train d'impulsions 120 a pour séquence { 1; 1; 4; 4; 4; 3 }. C'est un train d'impulsions séquences sans trous à minimum de redondance (quatre redondances). L'entrelacement 210 permet d'effectuer ces quatre mesures en utilisant dix-neuf périodes de récurrences au lieu de trente-neuf.

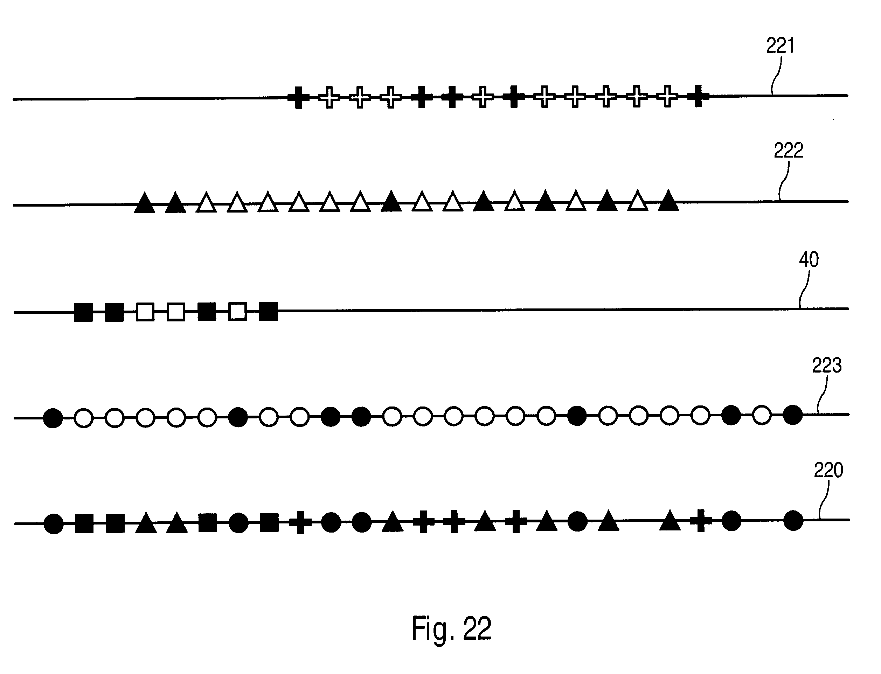

On se réfère maintenant à la figure 22 sur laquelle est représenté un autre exemple de mise en oeuvre. On entrelace quatre trains d'impulsion 221, 222, 40, 223. Le train d'impulsions 221, sans trous au sens large à minimum de redondance (aucune redondance), a pour séquence { 4; 1; 2; 6 }. Il comprend cinq impulsions, dure quatorze périodes de récurrences, et permet de remplacer un train d'impulsions uniforme de dix impulsions (durée utile). Le train d'impulsions 222, sans trous à minimum de redondance, a pour séquence { 1; 7; 3; 2; 2; 2 }. Il comprend sept impulsions et dure dix-huit impulsions. Il permet de remplacer un train d'impulsions uniforme de dix-huit impulsions. Le train d'impulsions 223, sans trous au sens large à minimum de redondance, a pour séquence { 6; 3; 1; 7; 5; 2 }. Il comprend sept impulsions et dure vingt-cinq périodes de récurrences. Il permet de remplacer un train d'impulsions uniforme de dix-neuf impulsions (durée utile). L'entrelacement 220 permet d'effectuer ces quatre mesures en utilisant vingt-cinq périodes de récurrences au lieu de quarante-sept (=10+18+19).

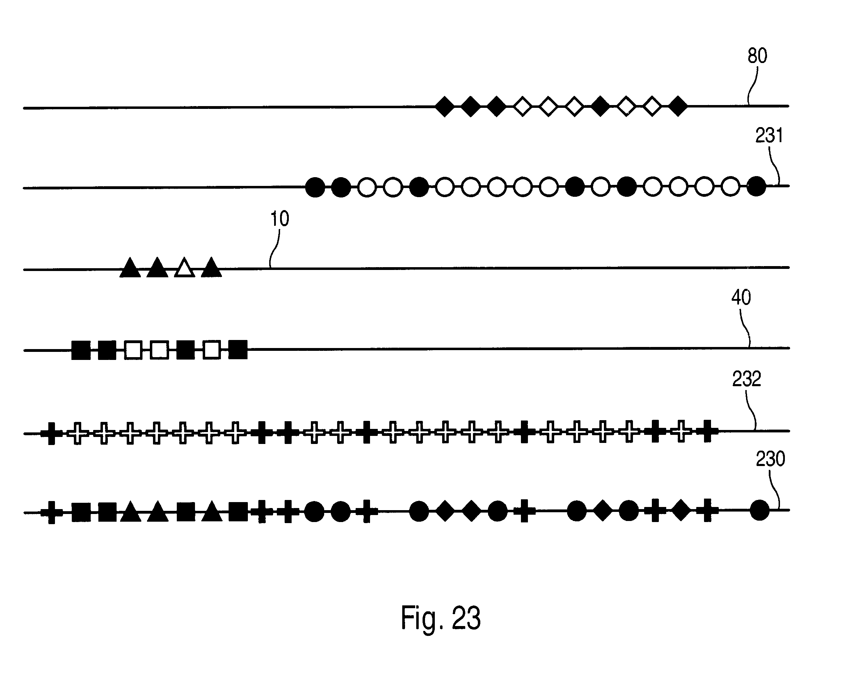

On se réfère maintenant à la figure 23 sur laquelle est représenté un autre exemple de mise en oeuvre. On entrelace cinq trains d'impulsion 80, 231, 10, 40, 232. Le train d'impulsions 231, sans trous au sens large à minimum de redondance (aucune redondance), a pour séquence { 1; 3; 6; 2; 5}. Il comprend six impulsions, dure quatorze périodes de récurrences, et permet de remplacer un train d'impulsions uniforme de dix-huit impulsions. Le train d'impulsions 232, sans trous au sens large à minimum de redondance (une redondance), a pour séquence { 8; 1; 3; 6; 5; 2 }. Il comprend sept impulsions, dure vingt-six périodes de récurrence, et permet de remplacer un train d'impulsions uniforme de dix-neuf périodes de récurrence. L'entrelacement 230 permet d'effectuer ces cinq mesures en utilisant vingt-huit périodes de récurrences au lieu de cinquante-quatre (=14+19+10+4+7).

Il est ainsi possible d'entrelacer tout type de train d'impulsions lacunaire. Un train d'impulsions lacunaire peut aussi être entrelacé avec un train d'impulsions non lacunaire, le train d'impulsions non lacunaire (uniforme) étant exécuté à l'intérieur du train d'impulsions lacunaire.

Avantageusement, l'invention est appliquée aux antennes à balayage électronique, des mesures étant effectuées dans des directions de visées différentes en entrelaçant des trains d'impulsion lacunaire selon l'invention. Toutes les impulsions des trains entrelacés ont les même caractéristiques, mais sont émises dans des directions différentes en contrôlant les différences de phases des éléments rayonnants. Ceci permet une déflexion rapide du faisceau, d'impulsion à impulsion.

**Revendications**

1. Procédé adapté à la mesure de la fréquence doppler des signaux reçus à partir de la détermination de la matrice de covariance desdits signaux reçus, ledit procédé comportant l'émission d'un premier train d'impulsions (10) pour effectuer une première mesure de fréquence Doppler, une première impulsion (11) formant le début du train d'impulsions, les autres impulsions (12, 14) étant séparées temporellement de la première impulsion par une durée multiple d'une période de récurrence Tr donnée,

**caractérisé en ce que** au moins deux impulsions successives (11, 12) du premier train d'impulsions présentent un écart temporel égal à une seule période $T_r$, et au moins deux impulsions successives (12, 14) du premier train d'impulsions présentent un écart temporel égal à un nombre entier, différent de 1, de périodes de récurrence $T_r$, la séquence formée par lesdites impulsions (11, 12, 14) constituant le premier train d'impulsion étant une séquence dont l'histgoramme des écarts entre deux impulsions fait apparaître un minimum de trous (111, 151, 152) et un minimum de redondances(131, 132).

2. Procédé selon la revendication 1, dans lequel la séquence formée par lesdites impulsions constituant le premier train d'impulsion est une séquence ne présentant pas de trou et pas de redondance.

3. Procédé selon la revendication 1, dans lequel la séquence formée par lesdites impulsions constituant le premier train d'impulsion est une séquence ne présentant pas de trou et un minimum de redondances.

4. Procédé selon la revendication 1, dans lequel la séquence formée par lesdites impulsions constituant le premier train d'impulsion est une séquence présentant un minimum de trous et un minimum de redondances, les trous correspondant à des impulsions non utilisées.

5. Procédé selon l'une quelconque des revendications précédentes, dans lequel on émet un second train d'impulsions (40) pour effectuer une seconde mesure de fréquence doppler, chaque impulsion du second train ((41, 42, 43) étant séparée de la première impulsion du premier train (11) et des autres impulsions du second train par des intervalles de temps multiple de la période de récurrence $T_r$, le premier et le second train d'impulsions (10, 40) étant entrelacés de sorte que au moins une impulsion (43) du second train est émise entre deux impulsions (12, 14) du premier train, qui sont deux impulsions successives séparées temporellement de plus d'une période de récurrence.

6. Procédé selon la revendication 5, dans lequel le second train d'impulsion (40) est émis dans une direction différente du premier train d'impulsions (10), les deux mesures de fréquence doppler étant ainsi réalisées dans deux directions différentes.

**Claims**

1. Method suitable for measuring the Doppler frequency of received signals based on the determination of the covariance matrix of said received signals, said method comprising the emission of a first pulse train (10) to perform a first Doppler frequency measurement, a first pulse (11) forming the beginning of the pulse train, the other pulses (12, 14) being separated timewise from the first pulse by a duration that is a multiple of a given recurrence period Tr, **characterized in that** at least two successive pulses (11, 12) of the first pulse train exhibit a time difference equal to a single period $T_r$, and at least two successive pulses (12, 14) of the first pulse train exhibit a time difference equal to an integer, different from 1, or recurrence periods $T_r$, the sequence formed by said pulses (11, 12, 14) constituting the first pulse train being a sequence for which the histogram of the differences between two pulses reveals a minimum of gaps (111, 151, 152) and a minimum of redundancies (131, 132).

2. Method according to Claim 1, wherein the sequence formed by said pulses constituting the first pulse train is a sequence that exhibits no gaps and no redundancies.

3. Method according to Claim 1, wherein the sequence formed by said pulses constituting the first pulse train is a sequence that exhibits no gaps and a minimum of redundancies.

4. Method according to Claim 1, wherein the sequence formed by said pulses constituting the first pulse train is a sequence exhibiting a minimum of gaps and a minimum of redundancies, the gaps corresponding to unused pulses.

5. Method according to any one of the preceding claims, wherein a second pulse train (40) is emitted to perform a second Doppler frequency measurement, each pulse of the second train (41, 42, 43) being separated from the first pulse of the first train (11) and from the other pulses of the second train by time intervals that are a multiple of the recurrence period $T_r$, the first and second pulse trains (10, 40) being interleaved so that at least one pulse (43) of the second train is emitted between two pulses (12, 14) of the first train, which are two successive pulses separated timewise by more than one recurrence period.

**6.** Method according to Claim 5, wherein the second pulse train (40) is emitted in a different direction from the first pulse train (10), the two Doppler frequency measurements thus being performed in two different directions.

**Patentansprüche**

**1.** Verfahren, das für die Messung der Dopplerfrequenz der empfangenen Signale ausgehend von der Bestimmung der Kovarianzmatrix der empfangenen Signale geeignet ist, wobei das Verfahren das Senden einer ersten Impulsfolge (10) aufweist, um eine erste Dopplerfrequenzmessung durchzuführen, wobei ein erster Impuls (11) den Beginn der Impulsfolge bildet, während die anderen Impulse (12, 14) zeitlich vom ersten Impuls durch eine Dauer getrennt sind, die ein Vielfaches einer gegebenen Rekurrenzperiode $T_r$ ist,
**dadurch gekennzeichnet, dass** mindestens zwei aufeinanderfolgende Impulse (11, 12) der ersten Impulsfolge einen zeitlichen Abstand gleich einer einzigen Periode $T_r$ haben, und mindestens zwei aufeinanderfolgende Impulse (12, 14) der ersten Impulsfolge einen zeitlichen Abstand gleich einer Ganzzahl anders als 1 von Rekurrenzperioden $T_r$ haben, wobei die von den Impulsen (11, 12, 14) geformte, die erste Impulsfolge bildende Sequenz eine Sequenz ist, deren Histogramm der Abstände zwischen zwei Impulsen ein Minimum an Löchern (111, 151, 152) und ein Minimum an Redundanzen (131, 132) erscheinen lässt.

**2.** Verfahren nach Anspruch 1, bei dem die von den die erste Impulsfolge bildenden Impulsen geformte Sequenz eine Sequenz ist, die kein Loch und keine Redundanz aufweist.

**3.** Verfahren nach Anspruch 1, bei dem die von den die erste Impulsfolge bildenden Impulsen geformte Sequenz eine Sequenz ist, die kein Loch und ein Minimum an Redundanzen aufweist.

**4.** Verfahren nach Anspruch 1, bei dem die von den die erste Impulsfolge bildenden Impulsen geformte Sequenz eine Sequenz ist, die ein Minimum an Löchern und ein Minimum am Redundanzen aufweist, wobei die Löcher nicht verwendeten Impulsen entsprechen.

**5.** Verfahren nach einem der vorhergehenden Ansprüche, bei dem eine zweite Impulsfolge (40) gesendet wird, um eine zweite Dopplerfrequenzmessung durchzuführen, wobei jeder Impuls der zweiten Folge (41, 42, 43) vom ersten Impuls der ersten Folge (11) und von den anderen Impulsen der zweiten Folge durch Zeitintervalle getrennt ist, die ein Vielfaches der Rekurrenzperiode $T_r$ sind, wobei die erste und die zweite Impulsfolge (10, 40) so verschachtelt sind, dass mindestens ein Impuls (43) der zweiten Folge zwischen zwei Impulsen (12, 14) der ersten Folge gesendet wird, welche zwei aufeinanderfolgende Impulse sind, die zeitlich um mehr als eine Rekurrenzperiode getrennt sind.

**6.** Verfahren nach Anspruch 5, bei dem die zweite Impulsfolge (40) in einer anderen Richtung als die erste Impulsfolge (10) gesendet wird, wobei die zwei Dopplerfrequenzmessungen so in zwei unterschiedlichen Richtungen durchgeführt werden.

Fig. 1

Fig. 2

Fig. 3

Fig. 4

Fig. 5

Fig. 6

Fig. 7

Fig. 8

Fig. 9

Fig. 10

Fig. 11

121   122          124          125          126          127

0              5              10             15

123                                                      120

Fig. 12

130

8

6

132

4

131                                   133

2

0
0    2    4    6    8    10   12   14   16   18

Fig. 13

140

0              5              10             15

Fig. 14

Fig. 15

Fig. 16

Fig. 17

Fig. 18

Fig. 19

Fig. 20

Fig. 21

Fig. 22

Fig. 23

## RÉFÉRENCES CITÉES DANS LA DESCRIPTION

**Documents brevets cités dans la description**

- FR 2735594
- FR 9506983
- US 5729465 A
- EP 0749083 A
- FR 2748587